# EUROPEAN PATENT SPECIFICATION

(11) **EP 0 785 726 B1**
(45) Date of publication and mention of the grant of the patent: **07.01.2004**
(21) Application number: 95935864.9
(22) Date of filing: 26.10.1995
(51) Int. Cl.: A23J 3/34

(54) **METHOD FOR PRODUCTION OF A MILK PROTEIN HYDROLYZATE**
VERFAHREN FÜR DIE HERSTELLUNG EINES MILCH-PROTEIN-HYDROLYSATES
PROCEDE DE FABRICATION D'UN HYDROLYSAT DE LACTO-PROTEINE

(30) Priority: 26.10.1994 DK 123994
(43) Date of publication of application: 30.07.1997
(73) Proprietor: Novozymes A/S, 2880 Bagsvaerd (DK)
(72) Inventor: NIELSEN, Per Munk, 2880 Bagsvaerd (DK)
(86) International application number: PCT/DK1995/000426
(87) International publication number: WO 1996/013174

(56) References cited:
- EP-A- 0 355 399
- WO-A-93/08702
- WO-A-94/25580
- US-A- 3 761 353

## Description

The invention comprises a method for production of a milk protein hydrolyzate.

It belongs to the prior art that hydrolysis of milk proteins will lower the tendency of the milk proteins to cause allergic reactions when feeding the milk proteins to infants. The possibility of causing allergic reactions in infants is related to the size of peptides, and to the composition and sequence of the amino acids in the peptides. Due to the good nutritive properties, the similarity with human milk proteins and the availability, proteins from cow's milk are often preferred as the raw material for mother's milk substitute. The traditional method of providing a very low allegenicity is extensive hydrolysis of the proteins. The degree of hydrolysis is selected in such manner that only a low content of protein detectable by the ELISA-technique remains in the final product. There are some disadvantages of the extensive hydrolysis which is mainly related to the sensoric properties of the product and a very large content of free amino acids causing high osmolality from the protein hydrolyzate. Also the extensive hydrolysis calls for a very long hydrolysis time and/or very high enzyme dosage leading to relatively high production costs. However, the reduction of the protein content detectable by the ELISA-technique in combination with a relatively low degree of hydrolysis and good organoleptic properties is still open to improvement.

Thus, it is the purpose of the invention to provide a method for production of a milk protein hydrolyzate having an extremely low content of protein detectable with ELISA-technique combined with a relatively low degree of hydrolysis, a low amino acid content, and very good organoleptic properties.

The method according to the invention for production of milk protein hydrolyzate is characterized by the fact that in a first step milk protein is hydrolyzed with a combination of any neutral and any alkaline protease from *Bacillus* together with an *Aspergillus oryzae* protease complex comprising both endoproteases and exopeptidases to a degree of hydrolysis between 35% and 55%, and that in a second step the mixture from the first step is ultrafiltered, the permeate comprising the milk protein hydrolyzate.

It is to be understood that the term "any neutral and any alkaline protease from *Bacillus*" covers any neutral and any alkaline protease produced by a *Bacillus* and also proteases identical to this group of enzymes, which have been produced by cloning in other hosts. This interpretation is also to be used in relation to the similar term "an *Aspergillus oryzae* protease complex".

In this specification the term "milk protein" is to be understood as any kind of milk raw material containing milk proteins, e.g. skimmed milk, casein, caseinate, or whey protein concentrate. A neutral protease is a protease with a pH optimum between 6 and 7, and an alkaline protease is a protease with a pH optimum above 7. The degree of hydrolysis (DH) is defined in US 4,100,024, column 2, lines 29-37. Furthermore it is to be understood that the milk protein used as raw material in the method according to the invention is present as a solution or a suspension with a protein concentration not higher than 25%, preferably 4-15%.

It should also be understood that the conditions for hydrolysing concerning temperature, pH, reaction time, and enzyme dosage should be selected as realistic process conditions e.g. temperature 30 - 65°C, pH 5 - 9 and reaction time less than 20 hours. It should also be noted that a process step for inactivation of the enzyme before the ultrafiltration also is regarded as a step normally terminating enzyme processess. Conditions for inactivating the enzymes must in every case be selected according to the heat tolerance of the enzymes used. It has been found that the organoleptic properties of the milk protein hydrolyzate are improved, if a flash heat treatment is used for inactivation of the enzymes.

Also it goes without saying that the ultrafiltration equipment does not need to be of any particulary type and that the membrane molecular cut off value is not critical, e.g. membranes with cut off values from 5000 to 100,000 Dalton can be applied. However, a membrane cut off value between 20,000 and 100,000 Dalton is preferred. It has been found that both a high flux during the process and also a satisfactory milk protein hydrolyzate is obtained with all membranes with cut off values in this broad interval.

Surprisingly it has been found that the milk protein hydrolyzate produced by means of the method according to the invention has an extremely low content of protein detectable with ELISA-technique using antibody against cow's milk protein and also exhibits a relatively low degree of hydrolysis, a relatively low content of free amino acids and good sensoric properties. Furthermore, it surprisingly has been found that the milk protein hydrolyzate after hydrolysis can be isolated as the permeate by using an ultrafiltration equipment mounted with a membrane with a large cut off value, whereby the milk protein hydrolyzate exhibits only a low content of detectable protein.

From the literature, e.g. Charol Wham, Australian Journal of Nutrition and Dietetics, (1992) 49:2, pp. 45-49 it is known that the mother's milk substitute Nutramigen® based on extensively hydrolyzed casein is very well examined during clinical tests and has been on the market for more than 40 years. The product is known to have only rare treatment failures when treating infants with cow's milk protein intolerence. From this information it seems reasonable to select the content of detectable protein in Nutramigen® as a standard that has to be met to assure a good protein hydrolyzate for application in mother's milk substitutes. From measurement of molecular weight distribution it is estimated that the degree of hydrolysis of the protein ingredient in Nutramigen® is more than 60%.

Lee, Y.-H., Journal of Pediatrics, 1992, pp. 47-50, states that there is a need for further development of the extensively hydrolyzed protein ingredient due to occasional reports on severely allergic patients reacting to it. Also, it is indicated that a lower content of free amino acids is desirable. This desideratum is fulfilled by the milk protein hydrolyzate according to the invention.

EP 321,603 describes a method for production of a milk protein hydrolyzate produced by a two step enzymatic hydrolysis in combination with heat treatments. This prior art describes the use of proteolytic enzymes different from the proteolytic enzymes used in the invention. The high degree of hydrolysis which can be obtained according to the invention cannot be obtained by the method described in this prior art.

US 4,600,588 describes a milk protein hydrolyzate which is produced by means of another combination of proteolytic enzymes than the combination of proteolytic enzymes used during the method according to the invention. Also, the prior art milk protein hydrolyzate is used as an emulsifier, whereas the milk protein hydrolyzate according to the invention is used for mother's milk substitutes and dietetic foods.

US 3,761,353 describes a protein hydrolyzate, in relation to which milk protein can be used as raw material. This prior art does not use the same combination of proteolytic enzymes as the method according to the invention.

PCT/DK92/00326 describes a casein hydrolyzate and a production method for this hydrolyzate. However, this prior art describes a hydrolyzate that has a molecular weight distribution which differs very much from the molecular weight distribution of the milk protein hydrolyzate according to the invention by being hydrolyzed to maximum 35% degree of hydrolysis and having a low content of free amino acids (< 10%). Also the enzyme from *Aspergillus* is described as an exopeptidase where according to the invention use is made of an Aspergillus oryzae protease complex also comprising endoprotease activity. Products made according to this prior art also exhibits a detectable protein content which is very high and outside the scope of this invention.

In patent application PCT/DK94/00165 (pending) it is suggested that an *Aspergillus oryzae* protease complex (Flavourzyme®) can be used for production of an ingredient for mother's milk substitutes by hydrolysis to a very high degree of hydrolysis. The degree of hydrolysis obtained should be higher than 35%, preferably higher than 60%, more preferably than 70%, especially higher than 80%. However it is not indicated that the combination of Flavourzyme® with other proteases can be selected in such manner that a very superior product can be obtained at relatively low degree of hydrolysis, and also there are given no details of the processing conditions for producing a protein hydrolyzate of this kind, which according to the invention is shown to be very important.

In a preferred embodiment of the method according to the invention the milk raw material is selected from casein or whey protein from cow's milk. In this manner a raw material is used which is a commodity on the market and can be obtained at relatively low prices in good quality. Milk casein is produced as acid coagulated protein or rennet coagulated casein. The acid coagulated casein is also sold as caseinates which is casein neutralised by a base (e.g. NaOH, Ca(OH)₂ or KOH). Whey protein is sold as concentrated protein obtained by ultrafiltration of whey from cheese production or from production of rennet coagulated or acid coagulated casein. Whey protein concentrates can be obtained with different contents of protein. Also total milk protein products containing both casein and whey protein is known as well as protein products containing only fractions of whey protein or casein.

In a preferred embodiment of the method according to the invention the milk protein is caseinate from cow's milk. This is a most inexpensive raw material which has a very high protein content calculated in relation to dry matter which makes it easier to process and recover the milk protein hydrolyzate.

In a preferred embodiment of the method according to the invention the neutral protease is selected from *Bacillus subtilis*. In this manner a well known and efficient protease is used.

In a preferred embodiment of the method according to the invention the neutral protease is Neutrase® from Novo Nordisk A/S, Denmark. In this manner a relatively cheap neutral protease can be used.

In preferred embodiments of the method according to the invention the alkaline protease from the genus *Bacillus* is the alkaline protease from *Bacillus licheniformis*, preferably Alcalase®, or Esperase® from Novo Nordisk A/S, Denmark. These are well known, efficient and relatively cheap alkaline proteases.

In a preferred embodiment of the method according to the invention the *Aspergillus oryzae* protease complex is Flavourzyme® from Novo Nordisk A/S, Denmark. This *Aspergillus oryzae* protease complex is relatively cheap and very efficient.

In a preferred embodiment of the method according to the invention the degree of hydrolysis is between 35% and 50%, preferably between 40% and 50%. With these ranges for degree of hydrolysis it has been found that optimum properties of the protein hydrolyzate are obtained with respect to low content of detectable protein, good sensoric properties, relatively low content of free amino acids and low osmolality.

In a preferred embodiment of the method according to the invention the ultrafiltration is carried out with a cut-off value between 5,000 and 100,000 Dalton, preferably between 90,000 and 100,000 Dalton. In regard to flux, it is an advantage to use an ultrafiltration unit with a cut-off value as large as possible. Surprisingly, it has been found that besides a high flux, also a most satisfactory product can be obtained with a cut-off value of 100,000 Dalton.

In a preferred embodiment of the method according to the invention the permeate is flash heat treated, preferably by heating to a temperature from 125 to 140°C for less than 10 seconds and flashing into vacuum, preferably between 60 and 80°C. In this manner enzyme activity accidentally penetrating the membrane will be inactivated and also the sensoric properties of the milk protein hydrolyzate will be improved by removing volatile compounds during flashing. It is to be understood that the flash heat treatment can be done before the ultrafiltration if this is wanted. The advantage could be a more accurate control of the degree of hydrolysis and a better control with the microbial growth in the hydrolyzate.

In a preferred embodiment of the method according to the invention the permeate from the second step is treated with activated carbon, preferably in amounts less than 5% activated carbon in relation to the amount of dry matter, and filtered to remove the carbon. In this manner the sensoric properties will be improved and also the content of detectable protein will be decreased slightly but significantly. It is to be understood that the carbon treatment can be carried out before the ultrafiltration or after the nanofiltration/concentration.

In a preferred embodiment of the method according to the invention the permeate from the second step or the filtrate from the previously indicated embodiment is concentrated by nanofiltration/reverse osmosis and/or by evaporation followed by drying. In this manner the milk protein hydrolyzate is converted to a stable product with a long shelf life by utilizing relatively low cost process steps. Also the application of filtration techniques can be selected to obtain a desalination during concentration.

In a preferred embodiment the milk protein hydrolyzate produced by the method according to the invention has a protein content detectable by ELISA-technique in relation to the total N content which is lower than milk protein content detectable in Nutramigen® in relation to the total N content. In this manner the product can be described as having optimum properties with respect to reduced chance of causing allergenic reactions when used as nutrient for infants.

The milk protein hydrolyzate produced by the method according to the invention may be used as a protein ingredient in mother's milk substitutes. It should be noted that the milk protein hydrolyzate is used as the protein ingredient in the mother's milk substitutes where it can be the only protein ingredient or mixed with other protein ingredients, e.g. amino acids if needed. The milk protein hydrolyzate according to the invention can be used in mother's milk substitutes, both as liquid formulations and as dried products.

The milk protein hydrolyzate produced by the method according to the invention may be used as a protein ingredient in dietetic foods. It is to be understood that dietetic foods can be any formulation of food made for dietetic use e.g. for hospitalized people, patients having specific needs or for athletes. The milk protein hydrolyzate can be used as the sole protein ingredient or be mixed with other protein containing ingredients.

The method according to the invention will be illustrated in the following examples.

### EXAMPLE 1

25 kg Na-caseinate (Miprodan 30 from MD Foods, Denmark) was used as raw material. The caseinate was dispersed in 253 liter 70°C warm water and cooled to a hydrolysis temperature of 50°C. The protein concentration was 7.9% (Nx6.38). The osmolality was 55 mOsm/kg before addition of enzymes. After hydrolysis the osmolality should be 443 mOsm/kg corresponding to a degree of hydrolysis of 45%.

### Enzyme additions:

1. 46 g Alcalase® 2.4L (Novo Nordisk A/S, Denmark)
2. 114 g Flavourzyme® with an activity of 3.38 AU/g (Novo Nordisk A/S, Denmark)
3. 454 g Neutrase® 0.5L (Novo Nordisk A/S, Denmark)

The duration of hydrolysis was 9 hours.

The mixture was separated into two equal parts, whereby one part is heat treated in a UHT pilot plant (Pasilac, Denmark) at 125°C by indirect heating with steam in a plate heat exchanger, and whereby the other part of the mixture was heat treated in a pilot flash heat treatment equipment (APV Anhydro, Denmark), 125°C holding time 3 seconds, and finally cooled to 70°C in flash chamber.

Both parts were processed further on in the same manner:

Ultrafiltration at 50°C in a PCI module 2.65 m² with FP100 membranes (cut off value 100,000 Dalton, PCl Membrane Systems, England) by concentration to the lowest possible volume and by addition of water corresponding to 50% of start volume of feed. Filtration was finalized by concentrating until the feeding tank was empty.

The permeate from the ultrafiltration was concentrated by nanofiltration (PCI, AFC90 membranes, 2.65 m² at 50°C). Concentration was carried on until dry matter measured as °Brix was 25°Brix.

The concentrate from the nanofiltration was spraydried.

Evaluation of the milk protein hydrolyzates showed:

Sensoric properties evaluated as 2% protein in water by 6 judges:
Flash treated product: - very acceptable taste without bitterness. No colour and almost no smell.
UHT treated product: - significant more taste than the flash treated product.
No difference for smell and colour between flash treated product and UHT treated product could be detected.

Protein content, measured by ELISA-technique, in % of content found in Nutramigen® (corrected for the difference in nitrogen content) was 80% of the amount found in Nutramigen®, both for the UHT treated product and the flash treated product.

### EXAMPLE 2

Exactly same experiment as Example 1 except that the concentrate from the nanofiltration was treated with 3% activated carbon, calculated in relation to dry matter (Picatif FGV120EW, Pica, France) for 30 minutes at 50°C. The activated carbon was removed by filtration and the filtrate was freeze dried.

The sensoric evaluation showed that the taste was slightly improved for the UHT-treated sample but no difference for the flash treated sample could be detected.

Protein content, measured by ELISA-technique, in % of content found in Nutramigen® (corrected for the difference in nitrogen content) was 65% of the amount found in Nutramigen® both for the UHT and the flash treated sample. The carbon treatment caused reduction in ELISA-detectable protein content.

### EXAMPLE 3

An experiment with hydrolysis of 500 ml of protein mixture as described in example 1 to different degree of hydrolysis ranging from 13% to 48% showed that the amount of detectable protein was the same for the degree of hydrolysis of 42%, 45.5% and 48%, meaning that no improvement should be expected for an increase in degree of hydrolysis above 42% with the conditions used.

At a degree of hydrolysis of 13% there were 20 times more protein detectable compared to a degree of hydrolysis of 42%, falling to 9 times at 22%, 4 times at 30% and 2.4 times at 34%.

### EXAMPLE 4

An experiment with hydrolysis of 500 ml of protein mixture as described in Example 1 to a degree of hydrolysis of 45% was tested for the effect of ultrafiltration. After heat treatment at 85°C for 3 minutes in order to inactivate the enzymes the mixtures were divided into two samples. One sample was freeze dried and the other was ultrafiltered in a Amicon 8400 ultrafiltration cell (membrane cut off 100,000 Dalton) and the permeate was freeze dried.

A statistical test on the measurement of protein in the samples showed with more than 99.99% significance that the ultrafiltration had a positive impact on lowering of the content of protein measured by ELISA-technique.

### EXAMPLE 5

An experiment with hydrolysing 2x500 ml protein mixture as described in Example 1 to a degree of hydrolysis of 47% was carried out comparing one hydrolysis using the enzymes Alcalase®, Neutrase® and Flavourzyme® (same dosage as in Example 1) with another hydrolysis where half of the amount of Alcalase® was substituted with Esperase® 7,5FG. The dosage of Esperase® was 0.09% calculated as % of protein.

After hydrolysis the mixtures were inactivated for 3 minutes at 85°C. Measurement of protein content by ELISA-technique showed no differences between the two hydrolyzates.

## Claims

1. Method for production of a milk protein hydrolyzate **characterized by** the fact that
a) milk protein is hydrolyzed with a combination of any neutral and any alkaline protease from *Bacillus* and an *Aspergillus oryzae* protease complex comprising both endoproteases and exopeptidases to a degree of hydrolysis between 40% and 55%, and
b) the mixture from step a) is ultrafiltered, the permeate comprising the milk protein hydrolyzate.

2. Method according to Claim 1, **characterized by** the fact that the milk protein is casein or whey protein from cow's milk.

3. Method according to Claim 1 or 2, **characterized by** the fact that the milk protein is caseinate from cow's milk.

4. Method according to Claims 1 - 3, **characterized by** the fact that neutral protease is from *Bacillus subtilis*.

5. Method according to Claims 1 - 4, **characterized by** the fact that alkaline protease is from *Bacillus licheniformis*.

6. Method according to Claims 1 - 5, **characterized by** the fact that degree of hydrolysis is between 40% and 50%.

7. Method according to Claims 1 - 6, **characterized by** the fact that the ultrafiltraton is carried out with a cut-off value between 5,000 and 100,000 Dalton, preferably between 90,000 and 100,000 Dalton.

8. Method according to Claims 1 - 7, **characterized by** the fact that the mixture from step b) is flash heat treated, preferably by heating to a temperature from 125 to 140°C for less than 10 seconds and flashing into vacuum, preferably between 60 and 80°C.

9. Method according to Claims 1 - 8, **characterized by** the fact that the permeate from step b) is treated with activated carbon, preferably in amounts less than 5% activated carbon in relation to the amount of dry matter, and filtered to remove the carbon.

10. Method according to Claims 1 - 9, **characterized by** the fact that the permeate from step b) or the filtrate according to Claim 9 is concentrated by nanofiltration/reverse osmosis and/or by evaporation followed by drying.

## Patentansprüche

1. Verfahren zur Herstellung eines Milchproteinhydrolysats, **dadurch gekennzeichnet, dass**
a) Milchprotein mit einer Kombination einer beliebigen neutralen und einer beliebigen alkalischen Protease aus *Bacillus* und eines *Aspergillus oryzae*-Proteasekomplexes, umfassend sowohl Endoproteasen und Expeptidasen, bis zu einem Hydrolysegrad zwischen 40 % und 55 % hydrolysiert wird, und
b) die Mischung aus Schritt a) ultrafiltriert wird, wobei das Permeat das Milchproteinhydrolysat umfasst.

2. Verfahren nach Anspruch 1, **dadurch gekennzeichnet, dass** das Milchprotein Kasein oder Molkeprotein aus Kuhmilch ist.

3. Verfahren nach Anspruch 1 oder 2, **dadurch gekennzeichnet, dass** das Milchprotein Kaseinat aus Kuhmilch ist.

4. Verfahren nach den Ansprüchen 1 bis 3, **dadurch gekennzeichnet, dass** die neutrale Protease aus *Bacillus subtilis* stammt.

5. Verfahren nach den Ansprüchen 1 bis 4, **dadurch gekennzeichnet, dass** die alkalische Protease aus *Bacillus licheniformis* stammt.

6. Verfahren nach den Ansprüchen 1 bis 5, **dadurch gekennzeichnet, dass** der Hydrolysierungsgrad zwischen 40 % und 50 % beträgt.

7. Verfahren nach den Ansprüchen 1 bis 6, **dadurch gekennzeichnet, dass** die Ultrafiltration mit einem Ausschlusswert zwischen 5.000 und 100.000 Dalton, vorzugsweise zwischen 90.000 und 100.000 Dalton, durchgeführt wird.

8. Verfahren nach den Ansprüchen 1 bis 7, **dadurch gekennzeichnet, dass** die Mischung aus Schritt b) einer Blitzhitzebehandlung unterzogen wird, vorzugsweise durch Erhitzen auf eine Temperatur von 125 bis 140 °C für weniger als 10 Sekunden und blitzartiges Überführen ins Vakuum, vorzugsweise zwischen 60 und 80 °C.

9. Verfahren nach den Ansprüchen 1 bis 8, **dadurch gekennzeichnet, dass** das Permeat aus Schritt b) mit Aktivkohle behandelt wird, vorzugsweise in geringeren Mengen als 5 % Aktivkohle im Verhältnis zu der Menge von Trockenmasse, und filtriert wird, um die Kohle zu entfernen.

10. Verfahren nach den Ansprüchen 1 bis 9, **dadurch gekennzeichnet, dass** das Permeat aus Schritt b) oder das Filtrat nach Anspruch 9 mittels Nanofiltration/reverser Osmose und/oder mittels Evaporierung, gefolgt von Trocknung, konzentriert wird.

## Revendications

1. Procédé de production d'un hydrolysat de lactoprotéine **caractérisé en ce que**
a) la lactoprotéine est hydrolysée avec une combinaison de n'importe quelle protéases de nature alcaline et/ou neutre dérivées de Bacillus et un complexe protéasique d'Aspergillus oryzae comprenant à la fois des endoprotéases et des exopeptidases à un degré d'hydrolyse compris entre 40% et 55% et
b) le mélange issu de l'étape a) est ultrafiltré, le perméat comprenant l'hydrolysat de lactoprotéine.

2. Procédé selon la revendication 1, **caractérisé en ce que** la lactoprotéine est la caséine ou la protéine de lactosérum issue du lait de vache.

3. Procédé selon la revendication 1 ou la revendication 2, **caractérisé en ce que** la lactoprotéine est le caséinate issu du lait de vache.

4. Procédé selon les revendications 1 à 3, **caractérisé en ce que** la protéase neutre est issue de Bacillus subtilis.

5. Procédé selon les revendications 1 à 4, **caractérisé en ce que** la protéase alcaline est issue de Bacillus licheniformis.

6. Procédé selon les revendications 1 à 5, **caractérisé en ce que** le degré d'hydrolyse est comprise entre 40% et 50%.

7. Procédé selon les revendications 1 à 6, **caractérisé en ce que** l'ultrafiltration est conduite avec un seuil de coupure allant de 5000 à 100000 Dalton, de préférence de 90 000 à 100 000 Dalton.

8. Procédé selon les revendications 1 à 7, **caractérisé en ce que** le mélange issu de l'étape (b) subit un traitement thermique éclair, de préférence par chauffage à une température allant de 125 à 140°C pendant moins de 10 secondes et un traitement thermique éclair sous vide, de préférence entre 60 et 80°C.

9. Procédé selon les revendications 1 à 8, **caractérisé en ce que** le perméat issu de l'étape b) est traité par du charbon actif, de préférence à raison de moins de 5% de charbon actif par rapport à la matière sèche, et est filtré pour éliminer le charbon.

10. Procédé selon les revendications 1 à 9, **caractérisé en ce que** le perméat issu de l'étape b) ou le filtrat selon la revendication 9, est concentré par nanofiltration/osmose inverse et/ou évaporation suivie d'un séchage.
